# EUROPEAN PATENT APPLICATION

(11) **EP 4 700 201 A1**
(43) Date of publication of application: **25.02.2026**
(21) Application number: 25196755.0
(22) Date of filing: 19.08.2025
(51) Int. Cl.: E06B 1/60

(54) **MOUNTING ELEMENT FOR MOUNTING A CONSTRUCTION ELEMENT, SUCH AS A WINDOW FRAME, DOOR FRAME AND/OR OUTER WALL ELEMENT, ON A BUILDING STRUCTURE, ASSEMBLY AND BUILDING STRUCTURE PROVIDED THEREWITH, AND METHOD THEREFOR**

(30) Priority: 19.08.2024 NL 2038458
(71) Applicant: De Engineeringsgroep B.V., 4104 AR Culemborg (NL)
(72) Inventor: HEESEN, Vincent Mathijs Cornelis, Culemborg (NL)
(74) Representative: Arnold & Siedsma

(57) **Abstract**

The invention relates to a mounting element for mounting a construction element, such as a window frame, door frame and/or outer wall element, on a building structure, assembly and building structure provided therewith, and method therefor. The mounting element can be fastened to one of the building structure or the construction element, wherein the mounting element comprises a resilient confining element which is configured to engage in installed state on an upright edge of the other of the building structure or the construction element, and to fix the construction element releasably to the building structure.

## Description

The present invention relates to a mounting element for mounting a construction element on a building structure. The invention relates particularly to mounting of a window frame, door frame and/or outer wall element as construction element in or on a building or other building structure.

Diverse mounting elements for mounting a construction element on a building structure are known in practice. Such mounting elements comprise fastening means, such as screws, nails, adhesive and/or other suitable fastening means, which affect and/or damage both the construction element and the building structure. This has the result that the construction element and/or the building structure cannot be reused, or less frequently so, in that uninstalling is impeded and may result in (further) damage to the construction element and/or the building structure. Such fastening means are usually also configured for single use, with the result that they cannot be reused when the construction element and the building structure are detached and mounting on another construction element and/or building structure is desirable. The latter is important in situations wherein future replacement and/or modification of the construction element and/or the building structure is expected, particularly in circular construction projects. In addition, such a mounting usually requires considerable installation work, which takes time and effort and increases costs. This is particularly unfavourable for modification of temporary structures and alteration thereof, such as temporary housing and residential complexes which can be utilized as flexible homes or other "temporary" solutions.

The present invention has for its object to provide a mounting element for mounting a construction element on a building structure whereby the above stated problems are obviated or at least reduced, such that such a construction element, for instance a window frame, door frame and/or outer wall element, is mountable on a building structure in effective manner.

This object is achieved with the mounting element for mounting a construction element, such as a window frame, door frame and/or outer wall element, on a building structure according to the invention, wherein the mounting element can be fastened to one of the building structure or the construction element, wherein the mounting element comprises a resilient confining element which is configured to engage in installed state on an upright edge of the other of the building structure or the construction element, and to fix the construction element releasably to the building structure.

In a currently preferred embodiment according to the invention the construction element is a window frame, door frame and/or an outer wall element. It is however also possible to envisage the construction element being a door frame, jamb, sill, lintel, window profile, sandwich panel, outer wall cladding and/or another suitable construction element.

In another currently preferred embodiment according to the invention the building structure is a bearing construction, such as in skeleton construction or load-bearing wall construction, an outer wall and/or another suitable building structure.

In a further currently preferred embodiment according to the invention the mounting element is mountable on the building structure and the resilient confining element is configured to engage in installed state on an upright edge of the construction element. Installed state is understood to mean a state in which the mounting element is installed/mounted releasably on the building structure or the construction element. It will be apparent that in an alternative embodiment it is also possible to arrange the mounting element on the construction element and to have it engage on an upright edge of the building structure.

In another currently preferred embodiment according to the invention the building structure forms an opening with one or more inward directed sides, preferably four. A number of mounting elements is here preferably fastened onto each inward directed side. The number of mounting elements can be zero, one, two, three, and so on, preferably one or more. The outer periphery of the part of the construction element being mounted on the building structure has substantially the same form and dimensions as the inner periphery of the building structure. The construction element hereby has one or more outward directed sides which fit in the opening of the building structure. The mounting element can thus clamp the construction element inside the sides of the building structure. The outward directed sides preferably comprise an upright edge on which the mounting element engages.

The resilient confining element is configured to engage in installed state on the upright edge of the building structure or the construction element. The resilient confining element is a mechanical element that works by fixing a spring mechanism round the building structure and/or the construction element. Such a spring mechanism can comprise a leaf spring, a coil spring, an elastomer or another suitable spring mechanism. It is possible that, in installed state, the resilient confining element presses against the building structure and/or the construction element, whereby constant pressure is exerted and whereby the building structure and/or the construction element is fixed. This provides the advantage that the resilient confining element fixes the building structure and/or the construction element while some degree of movement or flexibility is allowed, which can be advantageous in applications where vibrations or small movements occur. This is for instance the case in machines or vehicles, but also buildings, for instance in the case of a (severe) earthquake at the location of the building. The resilient confining element absorbs the energy of these movements, whereby the building structure and/or the construction element remains in place without becoming damaged. In a currently preferred embodiment the resilient confining element however fixes the building structure and/or the construction element in a state wherein no constant pressure is exerted on the building structure and/or the construction element. The resilient confining element is here engaged on the upright edge of the building structure or the construction element, whereby the mounting element, particularly the resilient confining element, forms a type of obstruction whereby the building structure and/or the construction element is fixed.

The upright edge of the construction element and/or the building structure according to the invention provides the advantage that the mounting element can easily engage on the building structure and/or the construction element in that such an upright edge forms a portion of the building structure and/or the construction element which is easily engageable, such as a ridge or other suitable, easily engaged form. The building structure and/or the construction element can thus be fixed in simple manner by the mounting element. This prevents any possible ineffective lateral clamping and instead provides for a mechanical retention between the construction element and the building structure, whereby a form-fitting action is obtained between the construction element and the building structure in effective manner.Compared to an engagement of the mounting element on a flat edge of the construction element and/or the building structure, whereby a limited and often insufficiently effective mounting by means of lateral clamping is obtained, the form-fitting action conversely provides for a robust and effective mounting.

The resilient confining element is further configured to fix the construction element releasably to the building structure in mounted state. Fix releasably is understood to mean that the construction element is fixable to the building structure and that this fixing can be undone in simple manner, without drastic uninstalling operations and without for instance damaging the construction element and/or the building structure. This is particularly made possible by the resilient confining element which, owing to its resilient action, can receive the construction element or the building structure by compressing and can confine it by springing back. Compressing the resilient confining element while the construction element is mounted on the building structure enables the process to be reversed, and enables the construction element and/or the building structure to be removed.

The mounting element according to the invention provides the advantage that the building structure and/or the construction element can be fixed releasably. No destructive techniques are used here during installing and/or uninstalling, whereby substantially no damage is done to the building structure and/or the construction element. The integrity of the materials used is hereby substantially preserved, whereby the building structure and/or the construction element remain reusable (for longer). This results in a reduction in material usage and waste, and in a decreased demand for new raw materials, this saving material costs. The mounting element according to the invention hereby contributes to the recyclability of materials and particularly provides a solution to the increasing pressure to improve sustainability in the construction industry.

A saving on labour costs is also made in that the mounting element can be fastened in rapid and simple manner to the building structure or the construction element and in that the construction element can be mounted in rapid and simple manner on the building structure by means of the mounting element according to the invention. In addition, the mounting element according to the invention provides a centring and/or stabilizing effect during arranging and/or removing of a construction element on/from a building structure, this improving the quality of and additionally facilitating the installing and/or uninstalling. The construction element or the building structure can here be arranged or removed in one movement without the need for further (temporary) mounting means for holding the construction element or the building structure in position temporarily while the construction element or the building structure is being mounted. The mounting element can further be manufactured in simple and inexpensive manner, for instance by folding and/or punching metal. Another alternative is manufacture via 3D printing from a 3D-printable material, such as PLA (Polylactic Acid), ABS (Acrylonitrile Butadiene Styrene), Nylon, PETG (Polyethylene Terephthalate Glycol), TPU (Thermoplastic Polyurethane) and/or another suitable 3D-printable material.

In a preferred embodiment according to the invention the resilient confining element comprises one or more retention elements configured to fix the construction element.

The retention elements are preferably configured to engage on the upright edge of the building structure or the construction element. In a currently preferred embodiment according to the invention the retention elements are arranged on the resilient confining element, such that the retention elements yield along with the spring mechanism of the resilient confining element.

In a further preferred embodiment according to the invention the retention elements preferably comprise a protrusion and/or a ridge.

Such a protrusion and/or ridge is particularly suitable as retention element in that it has a form behind which the upright edge of the building structure or the construction element can hook. The construction element is thus mountable on the building structure in simple manner and it provides the advantages as described for the mounting element.

In another embodiment according to the invention the resilient confining element is plate-like.

A plate-like resilient confining element gives the mounting element according to the invention a suitable form to serve as mounting element between the construction element and the building structure. This is because such a form is thin in at least one direction, whereby the mounting element and particularly the resilient confining element thereof takes up little space between the construction element and the building structure. A plate-like form also provides the advantage that the resilient confining element is easily bendable, this providing its resilient character.

In a preferred embodiment according to the invention the resilient confining element has a wholly or partially curved form in an unloaded state.

Unloaded state is understood to mean a state wherein substantially no external force is being exerted on the resilient confining element. Because the resilient confining element has a wholly or partially curved form in the unloaded state, the resilient confining element can be compressed/pressed down to a state in which the resilient confining element has wholly or partially a substantially flat or at least flatter form. This has the result that the resilient confining element can store energy and returns to its wholly or partially curved form in the unloaded state as soon as such an external force thereon disappears. The curved form in the unloaded state further provides the advantage that the resilient confining element has in at least one direction a greater dimension in the unloaded state than in a compressed/pressed-down state. This can have the result that the resilient confining element exerts a constant pressure on the construction element and/or the building structure and/or forms a type of obstruction which fixes the construction element and/or the building structure.

In a currently preferred embodiment according to the invention the resilient confining element is pressed down and the building structure or the construction element is removable in an uninstalling state, wherein the construction element is removed from the building structure.

Uninstalling state is understood to mean a state wherein the resilient confining element is loaded and wherein an external force is being exerted on the resilient confining element. The external force is particularly exerted such that the resilient confining element is pressed down and the resilient confining element has wholly or partially a substantially flat or at least flatter form. The uninstalling state with a substantially flat form provides the advantage that it allows the building structure and/or the construction element to be removed in that the resilient confining element detaches from the building structure and/or the construction element in the uninstalling state. Hereby, the resilient confining element does not exert a constant pressure on and/or the resilient confining element does not form a free passage for the construction element and/or the building structure.

In another embodiment according to the invention the mounting element further comprises one or more guides for guiding an uninstalling element for the purpose of bringing the resilient confining element into an uninstalling state.

In a currently preferred embodiment according to the invention the resilient confining element is brought into the uninstalling state by means of an uninstalling element. Such an uninstalling element is preferably configured to engage on the resilient confining element and to exert thereon a force such that the resilient confining element is compressed/pressed down. The uninstalling element is preferably designed for use in combination with the mounting element. Other objects can however also be used as uninstalling element. Such objects are preferably thin and/or elongate, such as for instance a knife or a screwdriver, such that they can engage on the mounting element in installed state.

In a particular embodiment according to the invention the mounting element is provided with guides for guiding such an uninstalling element. Such guides are preferably configured to support the uninstalling element in bringing the resilient confining element into the uninstalling state. The guides particularly comprise elements, preferably on the mounting element, along which the uninstalling element can glide and/or slide. The guides are preferably additionally configured to exert a force on the uninstalling element, such that the uninstalling element continues to exert a force on the resilient confining element when the uninstalling element is engaged on the resilient confining element and brings it into the uninstalling state.

In another embodiment according to the invention the mounting element further comprises one or more fastening surfaces for securing the mounting element to the building structure or the construction element with fastening means.

Such a fastening surface provides a part of the mounting element which is configured to make contact with the building structure and/or the construction element and to be fixed thereon. The number of fastening surfaces is preferably two or more. Such a fastening surface is configured to be fastened by means of fastening means. Such fastening means comprise screws, nails, adhesive and/or other suitable fastening means. The number of fastening means can be one, two, three, and so on. This number is preferably equal to or greater than the number of fastening surfaces. In a particular embodiment according to the invention the building structure and/or the construction element is manufactured from a material which is configured to receive such fastening means, such as wood. It is however also possible to envisage the mounting element being fastenable to the building structure or the construction element without fastening means, for instance in that the mounting element is magnetic and is fastenable by a magnetic force to the building structure or the construction element configured to receive such a force.

The invention further relates to an assembly of a mounting element in an embodiment according to the invention and an uninstalling element in an embodiment according to the invention, and to a building structure provided with such a mounting element.

Such an assembly and/or such a building structure provides similar advantages and effects as described for the mounting element.

The assembly of the mounting element and the uninstalling element according to the invention is preferably provided as a unit, such that a construction element mounted on a building structure by means of a mounting element according to the invention is removable in simple manner by means of the uninstalling element, which is configured to bring the mounting element into an uninstalling state.

The building structure provided with a construction element arranged with mounting elements in an embodiment according to the invention and/or the construction element preferably comprises an upright edge. Such an upright edge provides similar advantages and effects as described for the mounting element.

The invention further also relates to a method for mounting a construction element releasably on a building structure, the method comprising the steps of:
- providing a mounting element in an embodiment according to the invention;
- fastening the mounting element to the building structure or the construction element; and
- arranging the other of the building structure or the construction element.

The method provides similar advantages and effects as described for the mounting element and/or assembly and/or the building structure.

The resilient confining element is preferably pressed down during the arranging. The resilient confining element is particularly pressed down during the arranging by means of the building structure and/or the construction element.

In an advantageous embodiment according to the invention the method further comprises of removing the construction element from the building structure, wherein the resilient confining element is pressed down during removal by means of an uninstalling element in order to remove the building structure or the construction element. This provides the advantage that the building structure and/or the construction element is removable from the mounting element in that the mounting element is preferably in the uninstalling state.

Further advantages, features and details of the invention will be further elucidated below on the basis of exemplary embodiments thereof, wherein reference is made to the accompanying drawings, in which:
- Figure 1 shows a view of the mounting element according to the invention;
- Figures 2A-B show a view of the assembly, comprising the mounting element and an uninstalling element, according to the invention;
- Figures 3A-B show a view of a building structure provided with a construction element arranged with mounting elements according to the invention; and
- Figures 4A-B show a cross-section of a building structure of figure 3B.

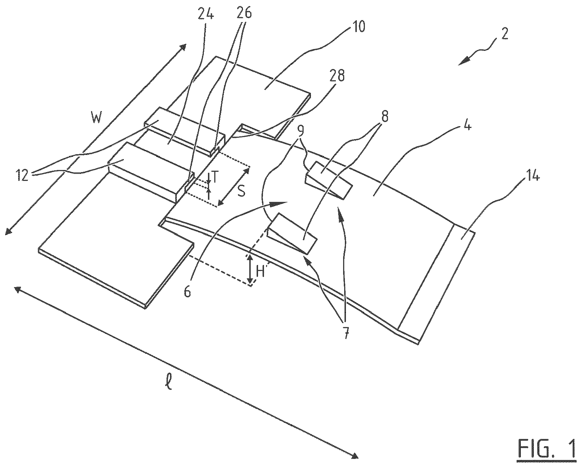

Mounting element 2 (figure 1) is provided with resilient confining element 4. Resilient confining element 4 is plate-like and, in the shown embodiment, is in an unloaded state and takes here a curved form. In the unloaded state mounting element 2 has a length 1, width W and height H. Provided on resilient confining element 4 are retention elements 6 comprising two protrusions 7 in the shown embodiment. Retention elements 6 comprise obliquely rising side 8 and upright side 9. Mounting element 2 further comprises fastening surface 10 for securing mounting element 2. Provided on fastening surface 10 are two guides 12 which are together positioned substantially centred in width W. On the other side of resilient confining element 4 mounting element 2 further comprises outer end 14.

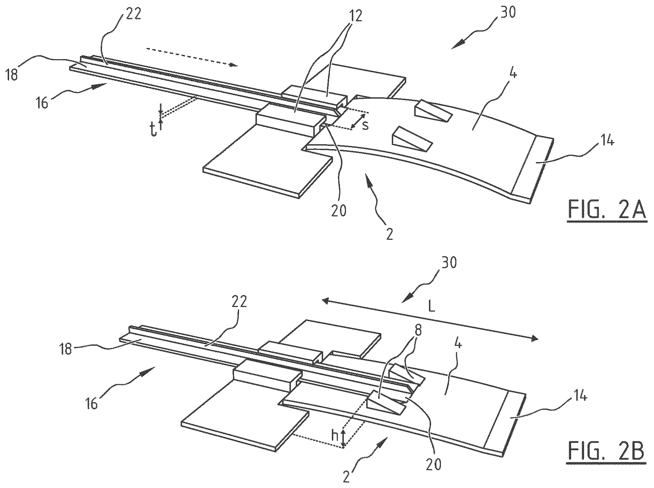

Resilient confining element 4 can be pressed down (figures 2A-B) whereby resilient confining element 4 is in an uninstalling state when pressed down (figure 2B). In the uninstalling state resilient confining element 4 takes a less curved form and resilient confining element 4 is substantially flat. Mounting element 2 is hereby longer and less high in the uninstalling state, whereby mounting element 2 has length L, width W and height h in the uninstalling state.

Resilient confining element 4 can preferably be pressed down by means of uninstalling element 16. In the shown embodiment uninstalling element 16 comprises uninstalling plate 18, which is provided with chamfering 20 on at least one short side, and strengthening edge 22. Uninstalling element 16 is insertable into mounting element 2 through guides 12. In the shown embodiment guides 12 are formed and positioned such that guides 12 form slot 24 with overhanging part 26. Slot 24 has a width S and height T and uninstalling plate 18 has a width s smaller than or equal to S and a height t smaller than or equal to T, such that uninstalling plate 18 is insertable into slot 24. Chamfering 20 of uninstalling plate 18 is configured to facilitate the engagement on resilient confining element 4, such that uninstalling element 16 easily crosses the transition or bend 28 between the flat fastening surface 10 and the curved resilient confining element 4 in the unloaded state, slides over resilient confining element 4 and press it down. Strengthening edge 22 forms an upright edge on uninstalling plate 18 such that uninstalling plate 18 substantially retains its flat form despite the force of the pressed-down resilient confining element 4 on uninstalling element 16. In addition, overhanging part 26 of guides 12 is configured to maintain the pressure of uninstalling element 16 against resilient confining element 4 despite the force of the pressed-down resilient confining element 4 on uninstalling element 16. In the shown embodiment mounting element 2 and uninstalling element 16 form assembly 30.

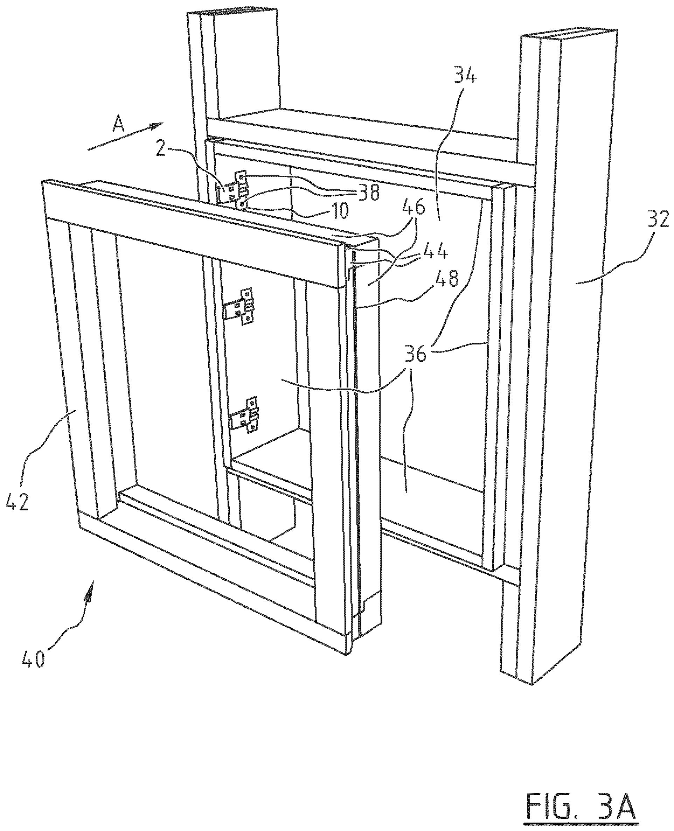

Building structure 32 (figures 3A-B) has opening 34 and building structure 32 is provided with four inward directed inner sides 36. In the shown embodiment three mounting elements 2, which are fastened to building structure 32 by means of fastening means 38, such as screws, nails or similar suitable fastening means 38, are provided on each inner side 36 of building structure 32. In the shown embodiment two fastening means 38 are provided per mounting element 2, which fastening means protrude through fastening surface 10 and into building structure 32, and so secure mounting element 2 to building structure 32.

Mounting elements 2 are configured to mount construction element 40 on building structure 32. In the shown embodiment construction element 40 is window frame 42, wherein construction element 40 is provided with four outward directed front outer sides 44 and four outward directed rear outer sides 46. Corresponding front outer sides 44 and rear outer sides 46 are substantially parallel and are offset by upright edge 48, wherein the distance between two opposite front outer sides 44 is smaller than the distance between two opposite rear outer sides 46. The distance between two opposite rear outer sides 46 of construction element 40 plus twice the height h of mounting element 2 is substantially equal to the distance between two opposite inner sides 36 of building structure 32 corresponding with construction element 40. The distance between two opposite front outer sides 44 of construction element 40 plus twice the height H of mounting element 2 is substantially equal to or smaller than the distance between two opposite inner sides 36 of building structure 32 corresponding with construction element 40.

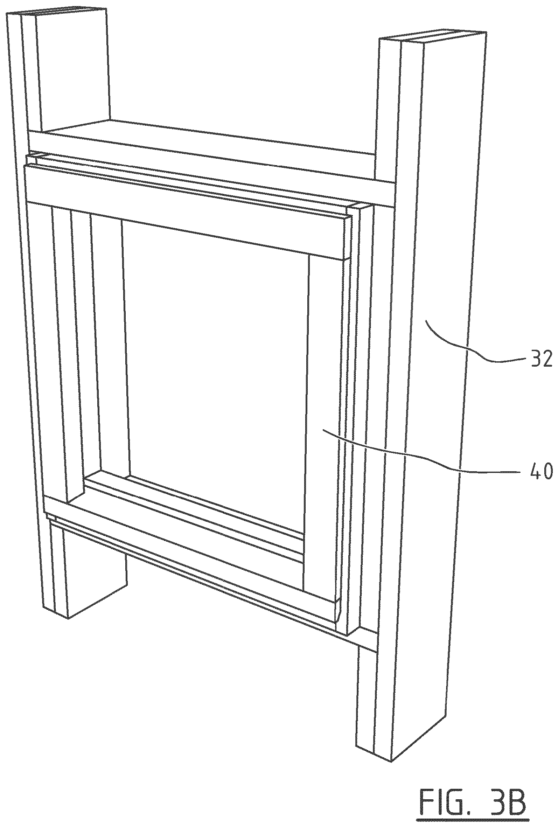

In the shown embodiment construction element 40 is mountable on a building structure 32 by means of mounting elements 2 by positioning construction element 40 in opening 34 in direction of arrangement A (figure 3B). During arranging of construction element 40 in opening 34 rear outer sides 46 construction element 40 press against resilient confining element 4, particularly against obliquely inclining side 8 of retention elements 6, of mounting element 2. Hereby, resilient confining element 4 is pressed down and mounting element 2 is in the uninstalling state. When upright edge 48 has passed upright side 9 of retention elements 6 in direction of arrangement A, resilient confining element 4 springs back to the unloaded state. In arranged position of construction element 40 upright side 9 is in contact with upright edge 48, such that the position of construction element 40 is fixed.

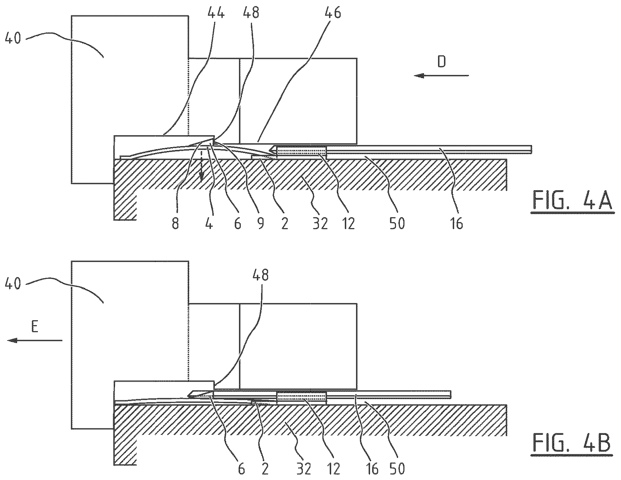

Construction element 40 (figures 4A-B) arranged on building structure 32 is uninstalled by inserting uninstalling element 16 into gap 50 between construction element 40 and building structure 32 in uninstalling direction D, such that uninstalling element 16 is guided through slot 24 formed by guides 12 and presses down resilient confining element 4 in order to bring mounting element 2 into uninstalling state. In uninstalling state upright edge 48 is brought out of contact with upright side 9 of retention elements 6. When all mounting elements 2 provided on building structure 32 have been brought into the uninstalling state, construction element 40 is freely removable in direction of removal E.

The present invention is by no means limited to the above described embodiments thereof. The rights sought are defined by the following claims, within the scope of which many modifications can be envisaged.

## Claims

1. Mounting element for mounting a construction element, such as a window frame, door frame and/or outer wall element, on a building structure, wherein the mounting element can be fastened to one of the building structure or the construction element, wherein the mounting element comprises a resilient confining element which is configured to engage in installed state on an upright edge of the other of the building structure or the construction element, and to fix the construction element releasably to the building structure.

2. Mounting element according to the foregoing claim, wherein the resilient confining element comprises one or more retention elements configured to fix the construction element.

3. Mounting element according to the foregoing claim, wherein the one or more retention elements comprise a protrusion and/or a ridge.

4. Mounting element according to any one of the foregoing claims, wherein the resilient confining element is plate-like.

5. Mounting element according to any one of the foregoing claims, wherein the resilient confining element has a wholly or partially curved form in an unloaded state.

6. Mounting element according to any one of the foregoing claims, wherein the resilient confining element is pressed down and the building structure or the construction element is removable in an uninstalling state, wherein the construction element is removed from the building structure.

7. Mounting element according to the foregoing claim, further comprising one or more guides for guiding an uninstalling element for the purpose of bringing the resilient confining element into an uninstalling state.

8. Mounting element according to any one of the foregoing claims, further comprising a fastening surface for securing the mounting element to the building structure or the construction element with fastening means.

9. Assembly for mounting and/or removing a construction element on/from a building structure, comprising:
- a mounting element according to any one of the foregoing claims; and
- an uninstalling element for bringing the mounting element into an uninstalling state.

10. Building structure provided with a construction element arranged with mounting elements according to any one of the claims 1-8.

11. Building structure according to the foregoing claim, wherein the building structure and/or the construction element comprises an upright edge.

12. Method for mounting a construction element releasably on a building structure, comprising of:
- providing a mounting element according to any one of the claims 1-8;
- fastening the mounting element to the building structure or the construction element; and
- arranging the other of the building structure or the construction element.

13. Method according to the foregoing claim, wherein the resilient confining element is pressed down during the arranging.

14. Method according to claim 12, wherein the resilient confining element is pressed down during the arranging by means of the building structure and/or the construction element.

15. Method according to any one of the claims 12-14, further comprises of removing the construction element from the building structure, wherein the resilient confining element is pressed down during removal by means of an uninstalling element in order to remove the building structure or the construction element.
